# EUROPEAN PATENT APPLICATION

(11) **EP 2 372 556 A1**
(43) Date of publication of application: **05.10.2011**
(21) Application number: 08878548.0
(22) Date of filing: 01.12.2008
(51) Int. Cl.: G06F 11/30, H04L 1/00, H04L 29/14

(54) **CONTROL CIRCUIT, INFORMATION PROCESSING APPARATUS, AND METHOD FOR CONTROLLING INFORMATION PROCESSING APPARATUS**

(71) Applicant: Fujitsu Limited, Kawasaki-shi, Kanagawa 211-8588 (JP)
(72) Inventor: SAKAMAKI, Hideyuki, Kawasaki-shi Kanagawa 211-8588 (JP)
(74) Representative: Stebbing, Timothy Charles
(86) International application number: PCT/JP2008/071768
(87) International publication number: WO 2010/064286

(57) **Abstract**

A control circuit of a chip 61 includes a data reception circuit unit 611 that receives data transmitted by a data transmission circuit of another chip, an error information extraction unit 613 that detects error information of the received data, and a data transmission circuit unit 617 that attaches, when the error information extraction unit 613 detected error information, the detected error information to the received data, and transmits the data to which the error information is attached, to a data reception circuit of another chip.

## Description

### FIELD

The present invention relates to a control circuit, an information processing apparatus and a method for controlling an information processing apparatus, for example, a control circuit, an information processing apparatus and a method for controlling an information processing apparatus, to perform notification of error information in data transmission/reception.

### BACKGROUND

An information processing apparatus adopting a multi CPU system having a plurality of CPUs (Central Processing Units) as operation processing apparatuses performs error detection of data in data transmission/reception between chips (LSIs) provided on its board as semiconductor devices. This improves the reliability of the multi CPU system. In addition, an information processing apparatus adopting the multi CPU system collects and analyzes error information of data. Accordingly, prevention of serious failure problems and prompt maintenance at the time of failure is performed.

Meanwhile, a data processing system with a plurality of processing apparatus connected through a connection path in which a transmission processing apparatus has means to detect anomaly in a data packet being transmitted to a reception processing apparatus and means to attach anomaly report information to a data packet being transmitted and send it to the reception processing apparatus has been proposed.
Patent Document 1: Japanese Laid-open Patent Publication No. H6-188909

### SUMMARY

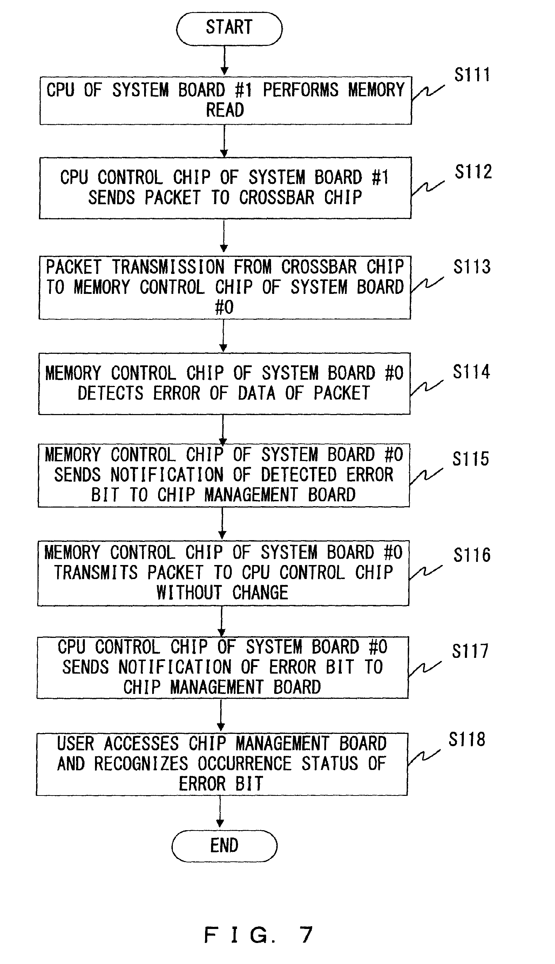

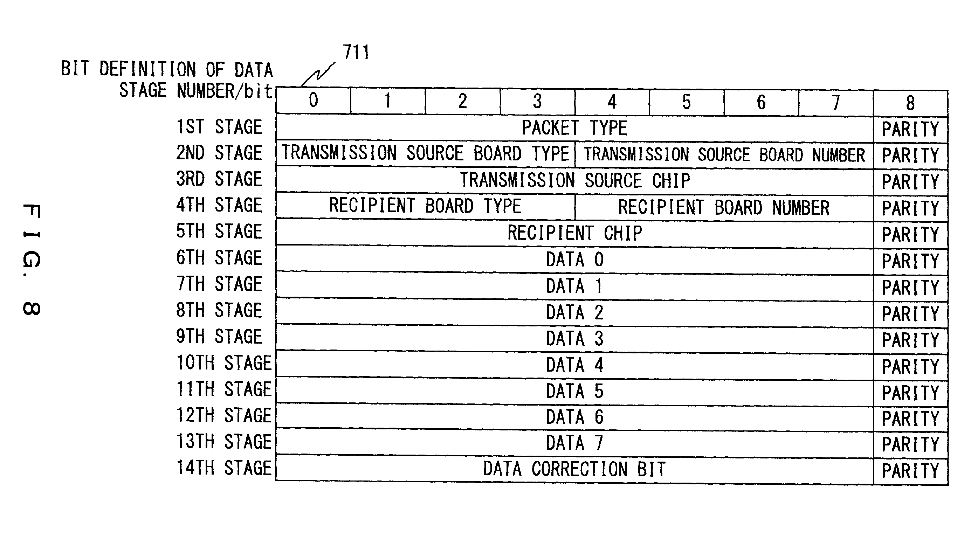

FIG. 7 and FIG. 8 are diagrams illustrating processing of error information of a transmission packet that forms the background of the present invention reviewed by the inventor of the present invention. The processing in FIG. 7 and FIG. 8 is an example of transmitting a packet 711 to a system board #0 after the CPU of a system board #1 executed a memory read order.

The CPU of the system board #1 reads the memory (step S111) and requests transmission to a crossbar chip to the CPU control chip of the system board #1. The CPU control chip of the system board #1 transmits a packet including data read from the memory to the crossbar chip (step S112). The crossbar chip receives the packet 711 from the CPU control chip, and transmits the packet 711 in FIG. 8 to the memory control chip of the system board #0 (step S113).

The memory control chip of the system board #0 receives the packet 711 from the crossbar chip, and detects an error of the data in the received packet (step S114). In this case, the memory control chip of the system board #0 corrects the error detected using error correction information of the packet 711. If the error cannot be corrected, notification of the bit in which the error is detected to a chip management board is performed (step S115).

Meanwhile, the memory control chip of the system board #0 transmits the packet 711 to the CPU control chip of the system board #0 without change (step S116). As a result, the CPU control chip of the system board #0 receives the transmitted packet 711, and detects the error that could not be corrected, from the received packet 711. Based on the error detection, the CPU control chip of the system board #0 performs notification of an error bit to the chip management board being a system control apparatus (service processor) (step S117).

The user may understand the occurrence status of the error bit sent to the chip management board by accessing the chip management board 4' via a terminal device such as a personal computer (step S118). That is, the user may find the error bit send from the memory control chip of the system board #0 and the CPU control chip.

However, according to a review by the inventor of the present embodiment, in the processing illustrated in FIG. 7, only the error bit may be found out. Therefore, the route of the path from the transmission source to the recipient of the packet experiencing the occurrence of the error cannot be understood. For this reason, the processing illustrated in FIG. 7 causes a problem as below.

For example, when hardware failure occurs at a certain point of time on the system board #1, the packet 711 including an error caused by it and cannot be corrected is transmitted to the system board #0. As a result, until recovery from the hardware failure, a large amount of error bits that are dependent on the same cause are accumulated on the chip management board. Especially, the notification of the error bit is sent to the chip management board not only from the memory control chip of the system board #0 but also from the CPU control chip of the system board #0. Therefore, even a larger number of error bits that are dependent on the same cause are accumulated in the chip management board.

Meanwhile, it is assumed that the user who noticed the occurrence of the hardware failure at a certain point of time stops data transmission/reception between the system boards #0 and #1. However, even in this case, a plurality of packets 711 kept on the system boards #0 and #1 until the time of the stoppage are transferred to the CPU control chip of the system board #0 eventually. As a result, notification of the error bit is sent to the chip management board with every transmission/reception of the packet 711. That is, the transfer of the packets including the same error bit to a plurality of chips in the information processing apparatus leads to the spread of the error of the same details. Therefore, a large amount of error bits that are dependent on the same error cause are accumulated on the chip management board.

Thus, as a result of the accumulation of the error bits on the chip management board it is not easy for the user to identify the path experiencing the occurrence of the error based on the error bit. In addition, a long period of time is required to identify the path experiencing the occurrence of the error.

A purpose of the present invention is to provide a control circuit, an information processing apparatus and a method for controlling an information processing apparatus to perform notification of error information in data transmission/reception.

A control circuit according to an embodiment of the present invention receives data transmitted by a data transmission circuit and transmits the received data to a data reception circuit. The control circuit includes a data reception unit to receive data transmitted by the data transmission circuit; an error information detection unit to detect error information of the received data; an error information attachment unit to attach, when the error information detection unit detects error information, the detected error information to the received data; and a data transmission unit to transmit, to the data reception circuit, the data to which the error information is attached.

According to an embodiment of the present invention, when an error occurs in data received by the data reception unit of the control circuit, the control circuit may determine, based on error information in the error information detection unit, whether an error of the data propagated, or the error occurred in a path in data transmission/reception. As a result, the control circuit may send notification of the determined error information to a monitoring apparatus. Accordingly, the monitoring apparatus may collect error information sent from respective control circuits. Accordingly, the user may identify the initial error path, the path in which the error of a packet occurred based on the error information, and may perform preventive maintenance before a serious failure occurs or prompt maintenance when a failure occurs.

### BRIEF DESCRIPTION OF DRAWINGS

FIG. 1 is a diagram illustrating the configuration of an information processing apparatus according to an example disclosed herein.
FIG. 2 is a diagram illustrating the configuration of a control circuit of the information processing apparatus illustrated in FIG. 1.
FIG. 3 is a diagram illustrating the bit definition of a packet.
FIG. 4 is a diagram illustrating the configuration of an error information table.
FIG. 5 is a diagram illustrating the processing flow of acquisition of error information of a packet.
FIG. 6 is a diagram illustrating the processing flow of acquisition of error information of a packet.
FIG. 7 is a diagram illustrating processing of error information of a transmission packet that forms the background of the present invention reviewed by the inventor of the present invention.
FIG. 8 is a diagram illustrating processing of error information of a transmission packet that forms the background of the present invention reviewed by the inventor of the present invention.

### DESCRIPTION OF EMBODIMENTS

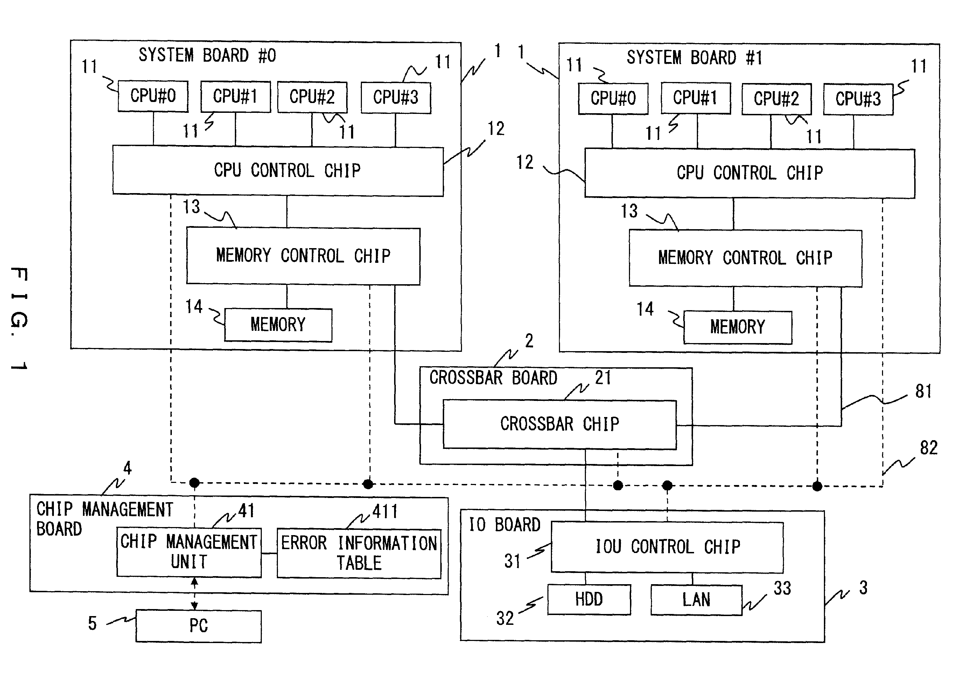

FIG. 1 is a diagram illustrating the configuration of a multi CPU system being an example disclosed herein.

The multi CPU system in FIG. 1 includes a plurality of CPU boards or system boards (board: package substrate) 1, a crossbar board 2, an IO (Input/Output) board 3, a chip management board 4, a personal computer (PC) 5. When the plurality of the CPU boards 1 are to be distinguished, it is represented as a system board #0, and so on.

The system board 1 includes a plurality of CPUs (central operation processing apparatuses) 11, a CPU control chip (chip: LSI) 12, a memory control chip 13, a memory 14. When the plurality of CPUs 11 are to be distinguished, it is represented as a CPU#0, and so on. The crossbar board 2 includes a crossbar chip 21. The IO board 3 includes an IOU (Input/Output Unit) control chip 31, an HDD (Hard Disk Drive) 32, a LAN (Local Area Network) 33. The chip management board 4 includes a chip management unit 41. The board is a package substrate on which a chip or a plurality of chips are mounted, for example. The chip is an LSI chip for example.

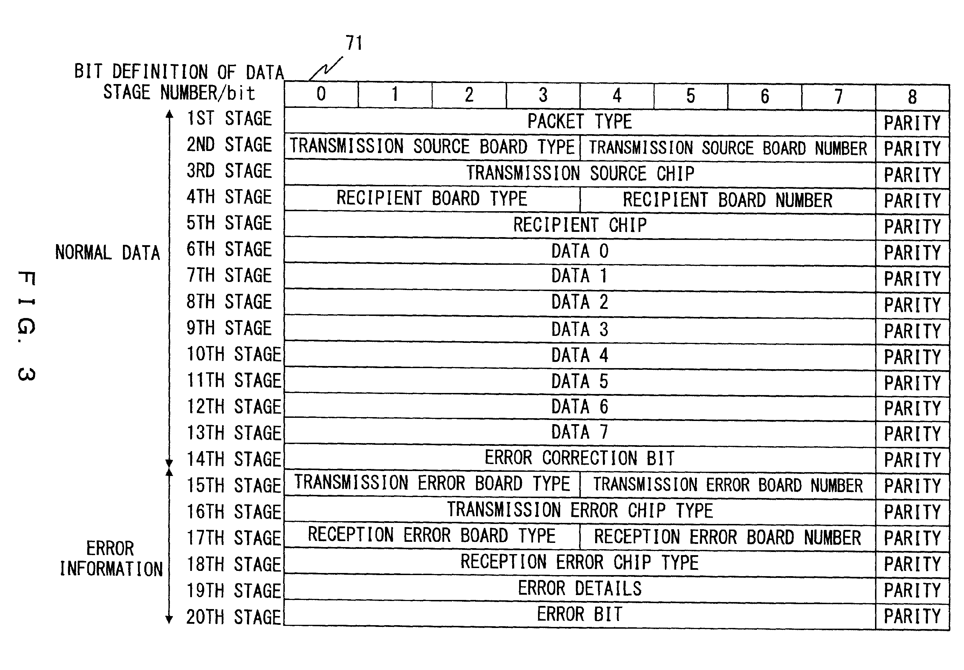

In the multi CPU system in FIG. 1, a main bus 81 is represented by a solid line. The main bus 81 actually includes a plurality of lines, and is a bus that connects, for example, the memory control chip 13 and the crossbar chip 21. A packet 71 in FIG. 3 is transmitted/received on the main bus 81.

In the multi CPU system in FIG. 1, a line for error information 82 is represented with a dotted line. The line for error information 82 is a line dedicated for error information provided independently from the main bus 81, and is a line that connects, for example, the memory control chips 13 of the system boards #0 and #1. Error information is transmitted/received on the line for error information 82.

The system board 1 realizes main functions to execute data operation and control processing of the information processing apparatus. The system board 1 receives data from another system board 1 or from the IO board 3 through the crossbar board 2 and performs processing described above and the like.

The CPU 11 is connected to the CPU control chip 12 through the main bus 81, and performs reading out or writing in of data for the memory 14 through the CPU control chip 12, and, executes various operations and control for data.

The CPU control chip 12 is connected to the CPU 11, the memory control chip 13 and the like through the main bus 81. The CPU control chip 12 performs control when the CPU 11 performs data transmission/reception with another CPU 11, the memory 14 and the crossbar chip 21. In addition, the CPU control chip 12 sends notification of error information to the chip management unit 41 through the line for error information 82.

The memory control chip 13 is connected to the CPU control chip 12, the crossbar chip 21 and the memory 14 through the main bus 81. The memory control chip 13 performs reading out and writing in of data for the memory 14. In addition, the memory control chip 13 sends notification of error information to the chip management unit 41 through the line for error information 82.

The memory 14 is connected to the memory control chip 13 through the main bus 81. Data on the memory 14 is read out or written in through the main bus 81 according to the control by the memory control chip 13.

The crossbar board 2 includes the crossbar chip 21, and transfers data between two system boards 1 or between the system board 1 and the IO board 3 through the main bus 81. The crossbar chip 21 is connected to the memory control chip 13 and an IOU control chip 31 through the main bus 81. The crossbar chip 21 performs data transmission/reception between the system board 1 and the IO board 3 or between a plurality of system boards 1. In addition, the crossbar chip 21 sends notification of error information to the chip management unit 41 through the line for error information 82.

In the IO board 3, the IOU control chip 31 performs data transmission/reception between the crossbar chip 21 and the input/output device through the main bus 81. The input/output device is the HDD 32, the LAN 33 as described above, for example. The IOU control chip 31 sends notification of error information to the chip management unit 41 thorough the line for error information 82. The multi CPU system in FIG. 1 is connected to another information processing apparatus trough the LAN 33. The input/output device may be other than the HDD 32 and the LAN 33.

In the chip management board 4, the chip management unit 41 obtains error information of the respective boards 1-3, and stores, in an error information table 411, and manages the obtained error information. The chip management board 4 is connected to the PC 5, and transmits data of error information to the PC 5 when the user analysis the error information. The chip management unit 41 is connected to the respective chips 12, 13, 21 and 31 on the respective boards 1-3 through the line for error information 82. The chip management unit 41 receives error information transmitted from the respective chips 12, 13, 21 and 31. The chip management unit 41 includes the error information table 411. The chip management unit 41 stores the received error information of the chip 12, 13, 21 and 31 in the error information table 411.

The chip management unit 41 reads out stored error information from the error information table 411 when the user accesses the error information table 411 through the PC 5, and transmits the read-out error information to the PC 5. That is, the chip management unit 41 is an error information notification unit that sends notification of detected error information to the PC 5 being the system control apparatus.

The PC 5 is a system control apparatus or a supervisor computer such as a service processor, and controls the information processing apparatus being the multi CPU system in FIG. 1. The user accesses the chip management unit 41 of the chip management board 4 through the PC 5, and refers to error information of the multi CPU system in FIG. 1 to analyze it and to perform maintenance and the like. Accordingly, the user may analyze, using the PC 5, the path experiencing the occurrence of the error, based on error information stored in the error information table 411.

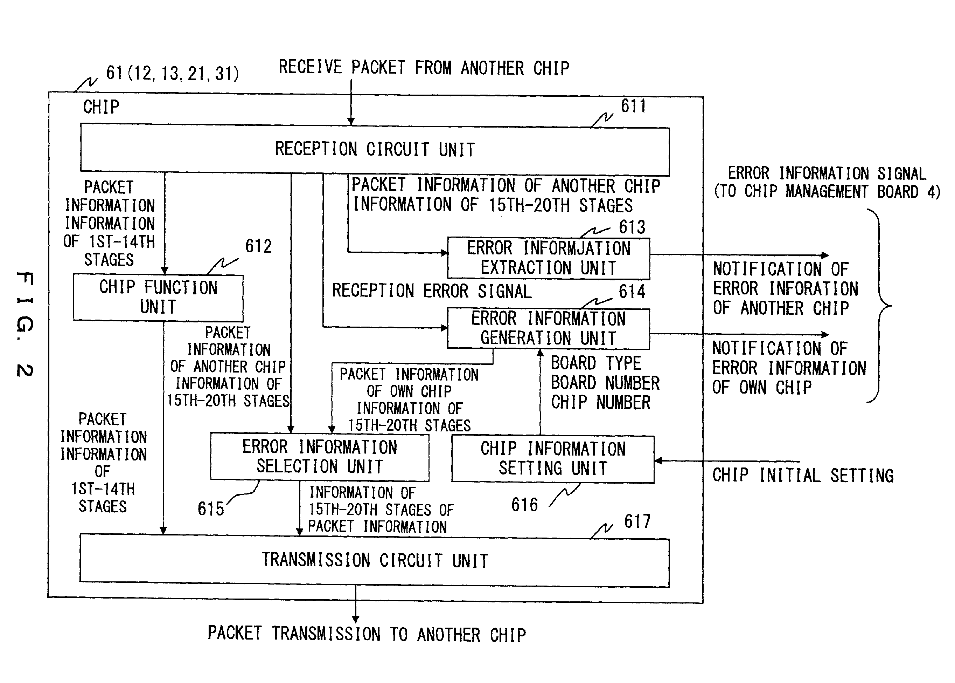

FIG. 2 illustrates the configuration of the respective chips 12, 13, 21 and 31 in the multi CPU system in FIG. 1.

In the information processing apparatus being the multi CPU system in FIG. 1, it is assumed that, for example, the memory control chip 13 of the system board #1 transmits data to the memory control chip 13 of the system board #0 through the crossbar chip 21. In this case, the memory control chip 13 of the system board #1 works as a data transmission circuit to transmit data, and the memory control chip 13 of the system board #0 works as a data reception circuit to receive data. The crossbar chip 21 is connected to the data transmission circuit and the data reception circuit, and works as a control circuit to receive data transmitted by the data transmission circuit, to send the received data to the data reception circuit, and to obtain error information of the data. For the other chips 12, 21 and 31, in the same manner, one works as a data transmission circuit, a data reception circuit or a control circuit with respect to others.

Therefore, in order to simplify explanation, in the following explanation, the CPU control chip 12, the memory control chip 13, the crossbar chip 21, and the IOU control chip 31 are collectively and simply referred to as a chip 61.

In the multi CPU system in FIG. 1, each chip 61 includes a reception circuit unit 611, a chip function unit 612, an error information extraction unit 613, an error information generation unit 614, an error information selection unit 615, a chip information setting unit 616, a transmission circuit unit 617.

The chip 61 receives the packet 71 transmitted from another chip 61, and transmits the packet 71 to another chip 61 after performing predetermined processing for the received packet 71. In addition, the chip 61 performs detection (extraction) of error information for the received packet 71 or generation of error information. The chip 61 sends notification of error information to the chip management board 4.

The reception circuit unit 611 is a data reception unit that receives data transmitted by another chip 61 being a data transmission circuit, and receives the packet 71 transmitted from the chip 61 being the transmission source. The reception circuit unit 611 performs error detection and an error correction process for the received packet 71. Based on the result of the error detection and the error correction process, the reception circuit 611 corrects the errors on which error correction can be performed and leaves the errors on which error correction cannot be performed, for the received packet 71.

When there is an error for which error correction cannot be done according to the result of the error detection and the error correction process, the reception circuit 611 generates a reception error signal and transmits it to the error information generation unit 614. Therefore, the reception circuit unit 611 is an error information detection unit that detects error information of received data. The reception error signal includes information for generating data of 15th-20th stages in a new packet 71 to be transmitted by the error information generation unit 614.

After this, the reception circuit unit 611 separates the received packet 71 into normal data and error information. Normal data is first-14th stages of the packet 71. The error information is 15th-20th stages of the packet 71. These are to be described later with reference to FIG. 3. The reception circuit unit 611 transmits the normal data to the chip function unit 612, and transmits the error information to the error information extraction unit 613 and the error information selection unit 615.

The chip function unit 612 performs a specific process to each chip 61 (chips 12, 13, 21 and 31). The chip function unit 612 receives the normal data of the packet 71 from the reception circuit unit 611, performs a predetermined process for it, and transmits the normal data as a result of the processing to the transmission circuit unit 617.

The error information extraction unit 613 receives error information of the packet 71 of another chip 61 from the reception circuit unit 611. The error information extraction unit 613 extracts error information of another chip 61 from the received error information, and generates as "error information of another chip". The error information extraction unit 613 sends notification of the "error information of another chip" to the chip management board 4 through the line for error information 82.

When the error information generation unit 614 receives the notification of a reception error signal from the reception circuit unit 611, the error information generation unit 614 generates as "error information of own chip". At this time, the error information generation unit 614 generates error information with information including chip information (information including the board type, board number, chip number) set by a chip information setting unit 616. The error information generation unit 614 sends notification of the generated "error information of own chip" to the chip management board 4 through the line for error information 82.

In addition, when the error information generation unit 614 receives notification of a reception error signal from the reception circuit unit 611, the error information generation unit 614 generates error information of its own chip 61 as error information of the packet 71. The error information generation unit 614 transmits as the generated error information of packet 71 of own chip 61 to the error information selection unit 615.

The error information selection unit 615 receives the error information of the packet 71 of another chip 61 from the reception circuit unit 611, and receives the error information of the packet 71 of its own chip 61 from the error information generation unit 614. The error information selection unit 615 performs a process according to the type of the received error information.

When a notification of error information of another chip 61 is sent from the reception circuit unit 611 and a notification of error information of own chip 61 is not sent from the error information generation unit 614, the error information selection unit 615 does not change the error information of another chip 61 received from the reception circuit unit 611. Therefore, the error information selection unit 615 transmits the received error information of the packet 71 without change to the transmission circuit unit 617 as error information of a new packet 71 to be transmitted. Accordingly, a new packet 71 to be transmitted having the same error information as the received packet 71 is generated by the transmission circuit unit 617.

When a notification of error information of another chip 61 is sent from the reception circuit unit 611 and a notification of error information of own chip 61 is sent from the error information generation unit 614, the error information selection unit 615 transmits the information generated based on the error information of another chip 61 and the error information of own chip 61 to the transmission circuit unit 617 as error information. Accordingly, a new packet 71 to be transmitted having error information in the received packet 71 and in own chip 61 is generated by the transmission circuit unit 617.

When a notification of error information of another chip 61 is not sent from the reception circuit unit 611 and a notification of error information of own chip 61 is sent from the error information generation unit 614, the error information selection unit 615 transmits the error information of own chip 61 to the transmission circuit unit 617 as error information. Accordingly, a new packet 71 to be transmitted having error information in own chip 61 is generated by the transmission circuit unit 617.

When a notification of error information of another chip 61 is not sent from the reception circuit unit 611 and a notification of error information of own chip 61 is not sent from the error information generation unit 614, the error information selection unit 615 transmits "empty" error information to the transmission circuit unit 617. Accordingly, a new packet 71 to be transmitted having no error information is generated by the transmission circuit unit 617.

The chip information setting unit 616 sets chip information such as the mounted board type, board number, number of the chip 61 etc. in the error information generation unit 614 as a part of the error information of own chip, according to an instruction from each board for chip initial setting.

The transmission circuit unit 617 is a data transmission unit that transmits data to which error information is attached, to another chip 61 being the data reception circuit. That is, the transmission circuit unit 617 is an error information attachment unit that attaches detected error information to received data when the error information detection unit (reception circuit unit 611) detects error information. The transmission circuit unit 617 receives normal data transmitted from the chip function unit 612, and receives error information transmitted from the error information selection unit 615. After this, the transmission circuit unit 617 generates a new packet 71 to be transmitted excluding the 14th stage by attaching the received error information to the received normal data. Furthermore, the transmission circuit unit 617 obtains an error correction code for the whole of the new packet 71 to be transmitted and write the error correction code in the 14th stage of the new packet 71 to be transmitted. Accordingly, the new packet 71 to be transmitted is completed. The transmission circuit unit 617 transmits the packet 71 to the chip 61 being the transmission destination to after the transmission circuit unit 617 generates the new packet 71 to be transmitted.

As described above, according to the multi CPU system in FIG. 1, error information from a recipient chip 61 is collected in detail, and error information is stored for each packet type in the error information table 411 prepared in advance. Therefore, the user may easily understand the path where the cause of the error occurrence is based on the error information table 411, and may easily indentify which path is the error occurrence factor.

Accordingly, even when a failure occurs in the signal lines between the chip 61 and the main bus 81 of the information processing apparatus, the use may easily identify the faulty site according to error information collected in the error information table 411. As a result, the user may promptly understand the maintenance details of parts replacement and the like of the information processing apparatus, enabling efficient maintenance work.

FIG. 3 is a diagram illustrating the bit definition of the packet 71 used in the information processing apparatus illustrated in FIG. 1.

In FIG. 3, the vertical axis represents each stage of the packet 71. The packet 71 includes the bit strings of the first-20th stages for example. The horizontal axis represents the bit position in the bit string of each stage of the packet 71. Each stage of the packet 71 includes nine bits of bit0-bit8 for example. The first-14th stages of the packet 71 are the normal data, and the 15th-20th stages of the packet 71 are the error information. The first-fifth stages of the packet 71 are the header information.

In the first stage of the packet 71, the bit0-bit7 represent the packet type, and the bit 8 is the bit representing the parity of the bit0-bit7. The parity is set so that, for example, the number of the bits being 1 in the first stage becomes an even number. The packet type represents, for example, the type of execution orders of the CPU 11 such as memory read and memory write. According to the parity, the reception circuit unit 611 may detect the existence of 1 bit error for each data in each stage of received packet 71. In the second-20 stages, the bit 8 is also the bit of horizontal parity.

In the second stage of the packet 71, the bit0-bit3 represent the board type of the transmission source, and the bit4-bit7 represent the board number of the transmission source. The third stage of the packet 71 represents the transmission source chip. In the fourth stage of the packet 71, the bit0-bit3 represent the board type of the recipient, and the bit4-bit7 represent the board number of the recipient. The fifth stage of the packet 71 represents the recipient chip.

The sixth-13th stages of the packet 71 are data0-data7, respectively, which are the original data transmitted/received between boards. The original data represent data other than the header information, error correction bit and error information.

The 14th stage of the packet 71 is the error correction bit, which is a bit string to perform error detection and error correction for the whole of the packet 71 by ECC (Error Check and Correction) for example. According data of the 14th stage of the packet 71, the chip 61 can perform 1 bit error correction and 2 bit error detection for received packet 71.

Specifically, the transmission circuit unit 617 in the chip 61 generates error detection and correction codes for the first-20th stages of the packet 71 (excluding the 14th stage of the packet 71). The transmission circuit unit 617 inserts data of the generation result into the packet information as the 14th stage of the packet 71. The chip 61 that received the packet 71 performs error correction or error detection described above according to the 14th stage of the packet 71.

The 15th-20th stages of the packet 71 represent error information. In the 15th stage of the packet 71, the bit0-bit3 represent the transmission error board type, and the bit4-bit7 represents the transmission error board number. In the 16th stage of the packet 71, the bit0-bit7 represent the transmission error chip type of the transmission error board. In the 17th stage of the packet 71, the bit0-bit3 represent the reception error board type, and the bit4-bit7 represent the reception error board number. In the 18th stage of the packet 71, the bit0-bit7 represent the reception error chip type of the reception error board. The transmission error chip type and the reception error chip type are information to identify, when the error information detection unit (reception circuit unit 611) detects error information, the chip 61 including the error information detection unit that detected error information.

In the 19th stage of the packet 71, the bit0-bit7 represent error details. The error details are represented by predetermined codes and the like, and indicate the place of occurrence of the error, or indicate that there is no occurrence of error. In the 20th stage of the packet 71, the bit0-bit7 represent the error bit at which the error has occurred. For example, when an error is detected in bit4 of the 10th stage of the packet 71, the error details are "10", and error bit is "4".

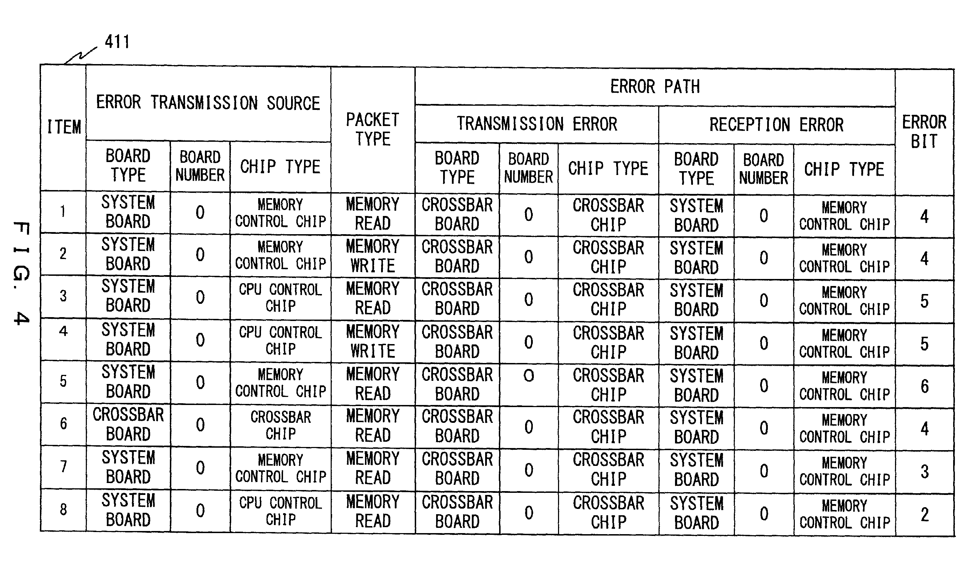

FIG. 4 is a diagram illustrating the configuration of the error information table 411.

The error information table 411 is provided in advance in the chip management unit 41 of the chip management board 4. The chip management unit 41 provided in the chip management board 4 receives error information transmitted from each chip 61 to the chip management board 4 through the line for error information 82, and stores the error information to the error information table 411.

The error information table 411 includes, for each error information, at least, the error notification source, the packet type, the error path, the error bit. These pieces of information are sent from the chip 61 that sent notification of the error information to the chip management unit 41. The error notification source includes, about the error notification source, information of its board type, board number, chip type. The error path includes transmission error indicating an error in the transmission path and reception error indicating error in the reception path. The transmission error include information of the board type, board number, chip type of the board in which an error has occurred in the transmission path. The reception error includes information of the board type, board number, chip type of the board in which an error has occurred in the reception path.

The error notification source is information indicating the chip 61 that sent notification of the error information to the chip management unit 41. The board type is information indicating the type of the board on which chip 61 that sent the notification of the error information is mounted. The board number is information that indicates the identification number of the board on which the chip 61 that sent the notification of the error information is mounted. The chip type is information indicating the type (for example, the memory control chip 13) of the chip 61 that send the notification of the error information.

The packet type indicates a type of the packet 71 in which the error in the sent error information has occurred.

The error path is information indicating the path in which the error has been detected, and represents whether the error has occurred in the chip 61 being the transmission source, or the error has occurred in the chip 61 being the recipient.

The transmission error is information that is sent in the case in which the error has occurred in the received packet 71. The transmission error is information including the board type of the board on which the transmission source chip 61 is mounted, the board number to identify the board, the chip type of the transmission source chip 61. The reception error is information that is sent in the case in which a packet 71 having error information has been received. The reception error includes the board type of the board on which the chip 61 that received the packet 71 having the error information is mounted, the board number to identify the board, and the chip type of the recipient chip 61.

The error bit is information of the error bit at which the chip 61 that detected an error detected the error.

The information described above is managed and stored by the chip management unit 41. The chip management unit 41 of the chip management board 4 receives error information including information corresponding to the items in the error information table 411 described above from the chip 61 through the line for error information 82. From the transmitted error information, the chip management unit 41 stores the error information by each item in the error information table 411.

Accordingly, at the time of maintenance of the information processing apparatus, it becomes possible for the user to track the initial error path, the path in which the error of the packet has occurred by using an analysis program and the like based on the error information stored in the error information table 411 through the PC 5.

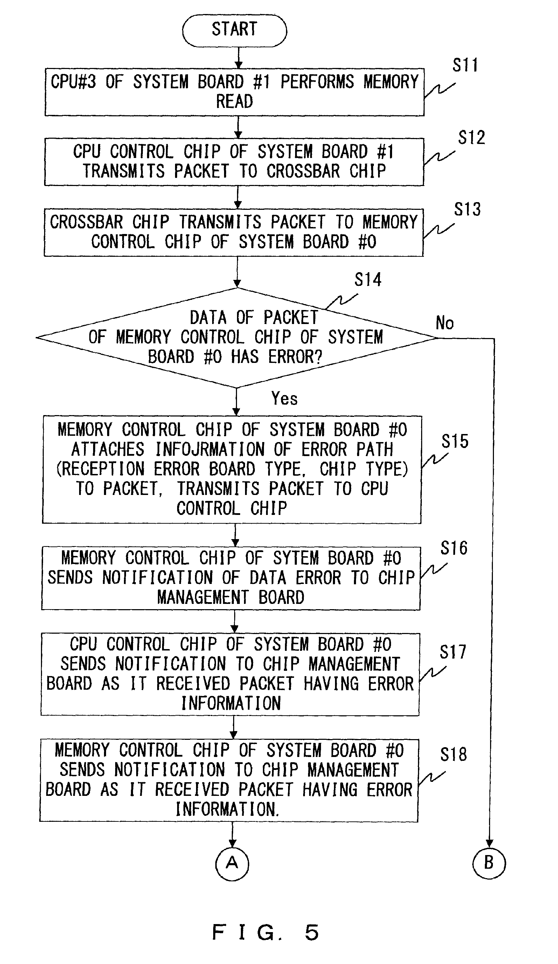

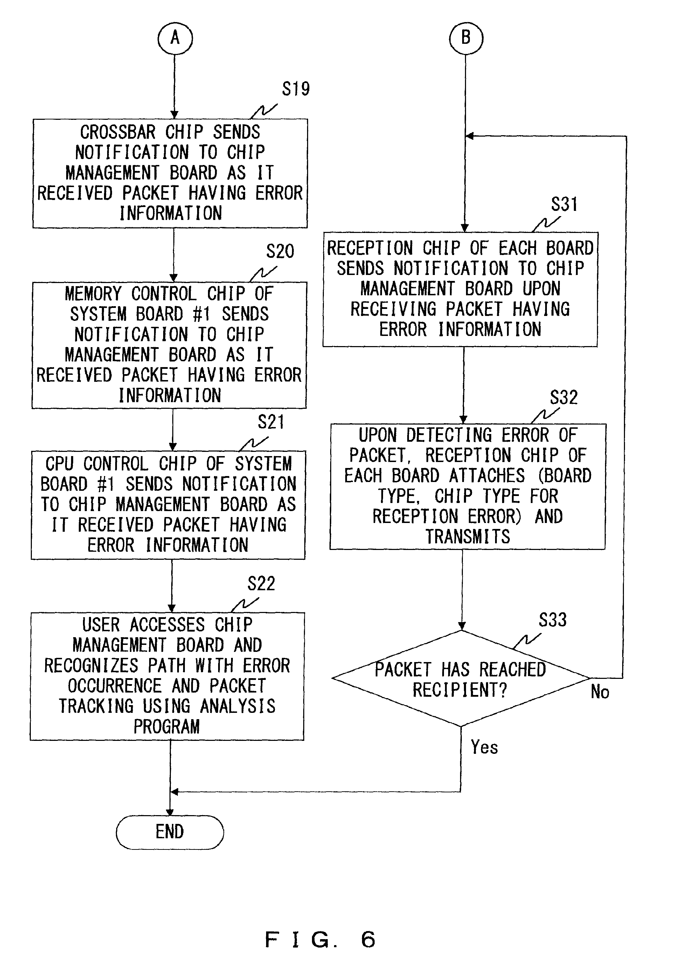

FIG. 5 and FIG. 6 are diagrams illustrating the process flow of acquisition of error information of a packet.

The process in FIG. 5 and FIG. 6 is an example in which, for example, a CPU#3 of the system board #1 transmits a packet 71 to the system board #0 after executing the memory read order of the system board #0. Meanwhile, in order to simplify the explanation, it is assumed that no error of the packet 71 occurs in step S11-S13.

The CPU#3 of the system board #1 requests the CPU control chip 12 to execute read (read-out) order of data on the memory 14 of the system board #0 (step S11). In response to the request, the CPU control chip 12 of the system board #1 makes the memory control chip 13 send a packet 71 including the read-out data to the crossbar chip 21 of the crossbar board 2 (step S12). The destination of the packet 71 is set as the memory control chip 13 of the system board #0.

The crossbar chip 21 that received the packet 71 further transmits the packet 71 to the memory control chip 13 of the system board #0 (step S13) . In response to this, the memory control chip 13 of the system board #0 receives the packet 71 transmitted from the crossbar chip 21, and checks whether of not an error of data of the received packet 71 is detected (step S14).

When an error of data is detected (Yes in step S14), step S15 is executed. When an error of data is not detected (No in step S14), step S31 is executed.

When an error of data is detected (Yes in step S14), the memory control chip 13 of the system board #0 write information of the error path in the packet 71 as error information. In this case, as the information of the error path, data of the 17th-20th stages of the packet 71 such as the reception error board type, the chip type and the like are written in the packet 71. The memory control chip 13 of the system board #0 transmits the packet 71 having the error information to the CPU control chip 12 of the system board #0 (step S15). In addition, the memory control chip 13 of the system board #0 sends notification of the error information as error information in its own chip 61 to the chip management board 4 (step S16).

The CPU control chip 12 of the system board #0 receives the packet 71 having the error information from the memory control chip 13, and extracts the error information of the received packet 71. The CPU control chip 12 sends notification of the error information of the received packet 71 as error information in another chip 61 to the chip management board 4 (step S17).

The memory control chip 13 of the system board #0 receives the packet 71 having the error information from the CPU control chip 12 of the system board #0, and extracts the error information of the received packet 71. The memory control chip 13 sends notification of the error information of the received packet 71 as error information in another chip 61 to the chip management board 4 (step S18).

The crossbar chip 21 receives the packet 71 having the error information from the memory control chip 13 of the system board #0, and extracts the error information of the received packet 71. The crossbar chip 21 sends notification of the error information of the received packet 71 as error information in another chip 61 to the chip management board 4 (step S19).

The memory control chip 13 of the system board #1 receives the packet 71 having the error information from the crossbar chip 21, and extracts the error information of the received packet 71. The memory control chip 13 sends notification of the error information of the received packet 71 as error information in another chip 61 to the chip management board 4 (step S20).

The CPU control chip 12 of the system board #1 receives the packet 71 having the error information from the memory control chip 13 of the system board#1, and extracts the error information of the received packet 71. The CPU control chip 12 sends notification of the error information of the received packet 71 as error information in another chip 61 to the chip management board 4 (step S21).

In the chip management board 4, the chip management unit 41 collects the error information sent as described above, and stores it in the error information table 411. The user accesses the chip management board 4 through the PC 5, and performs tracking of the packet 71 regarding the error occurrence path and error detection site. For example, the user identifies the site at which the error has occurred, using an analysis program provided in advance (step S22).

In step S14, when an error of data is not detected (No in step S14), the recipient chip 61, namely the memory control chip 13 of the system board#0 in this case, if the packet 71 having the error information is received, detects the error information of the received packet 71. The reception chip 61 (the memory control chip 13 of the system board#0, the same hereinafter) sends notification of the error information of the received packet 71 as error information in another chip 61 to the chip management board 4 (step S31).

When an error of the received packet 71 is detected, the reception chip 61 attaches the board type, chip type of the reception error to the error information of the received packet 71, and transmits the packet 71 to the chip 61 being the transmission destination (step S32). In this case, the reception chip 61 sends notification of the error information as an error information in its own chip 61 to the chip management board 4.

After this, the reception chip 61 checks whether or not the packet 71 has reached the chip 61 being the transmission destination (step S33). When the packet 71 has not reached (No in step S33), the reception chip 61 repeats steps S31-S33. When the packet 71 has reached (Yes in step S33), the reception chip 61 terminates the process.

## Claims

1. A control circuit receiving data transmitted by a data transmission circuit and transmitting the received data to a data reception circuit, comprising
a data reception unit to receive data transmitted by the data transmission circuit;
an error information detection unit to detect error information of the received data;
an error information attachment unit to attach, when the error information detection unit detects error information, the detected error information to the received data; and
a data transmission unit to transmit, to the data reception circuit, the data to which the error information is attached.

2. The control circuit according to claim 1, wherein
the error information comprises information to identify, when the error information detection unit detects error information, a control circuit having the error information detection unit that detected the error information.

3. An information processing apparatus including a data transmission circuit transmitting data, a data reception circuit receiving data and a control circuit connected to the data transmission circuit and the data reception circuit, the data control circuit comprising
a data reception unit to receive data transmitted by the data transmission circuit;
an error information detection unit to detect error information of the received data;
an error information attachment unit to attach, when the error information detection unit detects error information, the detected error information to the received data; and
a data transmission unit to transmit, to the data reception circuit, the data to which the error information is attached.

4. The information processing apparatus according to claim 3, wherein
the information processing apparatus further comprises
a system control apparatus to control the information processing apparatus, and
the control circuit further comprises
an error information notification unit to send notification of the detected error information to the system control apparatus.

5. The information processing apparatus according to claim 3, wherein
the error information comprises information to identify, when the error information detection unit detects error information, a control circuit having the error information detection unit that detected the error information.

6. In a method for controlling an information processing apparatus including a data transmission circuit transmitting data, a data reception circuit receiving data and a control circuit connected to the data transmission circuit and the data reception circuit, comprising:
receiving in which a data reception unit included in the control circuit receives data transmitted by the data transmission circuit;
detecting in which an error information detection unit included in the control circuit detects error information of the received data;
attaching in which an error information attachment unit included in the control circuit attaches, when the error information detection unit detects error information, the detected error information to the received data; and
transmitting in which a data transmission unit included in the control circuit transmits, to the data reception circuit, the data to which the error information is attached.

7. The method for controlling an information processing apparatus according to claim 6, wherein
the information processing apparatus further comprises a system control apparatus to control the information processing apparatus;
the control circuit further comprises an error information notification unit; and
the method for controlling the information processing apparatus further comprises
sending in which the error information notification unit sends notification of the detected error information to the system control apparatus.

8. The method for controlling an information processing apparatus according to claim 6, wherein
the error information comprises information to identify, when the error information detection unit detects error information, a control circuit having the error information detection unit that detected the error information.
